# EUROPEAN PATENT APPLICATION

(11) **EP 2 453 338 A1**
(43) Date of publication of application: **16.05.2012**
(21) Application number: 10797189.7
(22) Date of filing: 02.07.2010
(51) Int. Cl.: G06F 3/02, H01H 13/14, H04M 1/02, H04M 1/23

(54) **OPERATION KEY AND TERMINAL DEVICE**

(30) Priority: 10.07.2009 JP 2009164059
(71) Applicant: NEC Corporation, Tokyo 108-8001 (JP)
(72) Inventor: IWAKI, Yoshihiro, Tokyo 108-8001 (JP)
(74) Representative: Betten & Resch
(86) International application number: PCT/JP2010/061647
(87) International publication number: WO 2011/004878

(57) **Abstract**

Provided is an operation key in which power of a finger is efficiently transmitted and a terminal device equipped with the operation key.

The operation key is equipped with a first surface which protrudes upwards in an entire region and has an upper side which is smoothly curved part having a maximum point between both corners and a ers a second surface which overlays the overlays the curved the opposing side of the first surface, protrudes upwards in the entire region in a direction or the opposing side, has the maximum point between the both corners, and is a curved surface which is in a direction crossing at right angles with the opposing side, wherein a length of a line from the maximum point of the first surface to a bottom side of the first surface perpendicularly to the bottom side along the first surface is shorter then a length of a line from the maximum point to a side which is opposing the first surface perpendicularly to the opposing side along the second surface.

## Description

### TECHNICAL FIELD

The present invention relates to an operation key and a terminal device equipped With the operation key.

### BACKGROUND ART

In recent years, for the terminal device such as mobile phones, a demand of miniaturization is increasing in addition to provide a plurality of functions. In order to miniaturize the terminal device, it is effective to miniaturize an operation unit which occupies major area of a surface of the terminal device. In addition, in order to miniaturize the operation unit, it can consider designing each operation key, which is included in the operation unit, in a small size. However, a user may encounter a difficulty of manipulating the key operations in the case that a size of the operation key becomes small. Moreover, the area of the operation key for marking numbers and characters and the others on it will also become small. For this reason, a user ay have an inconvenience of checking the numbers and the characters or the like. Accordingly, in order to miniaturize the terminal device, it is desirable to arrange the operation key in a small area as much as possible without damaging operability or functionality.

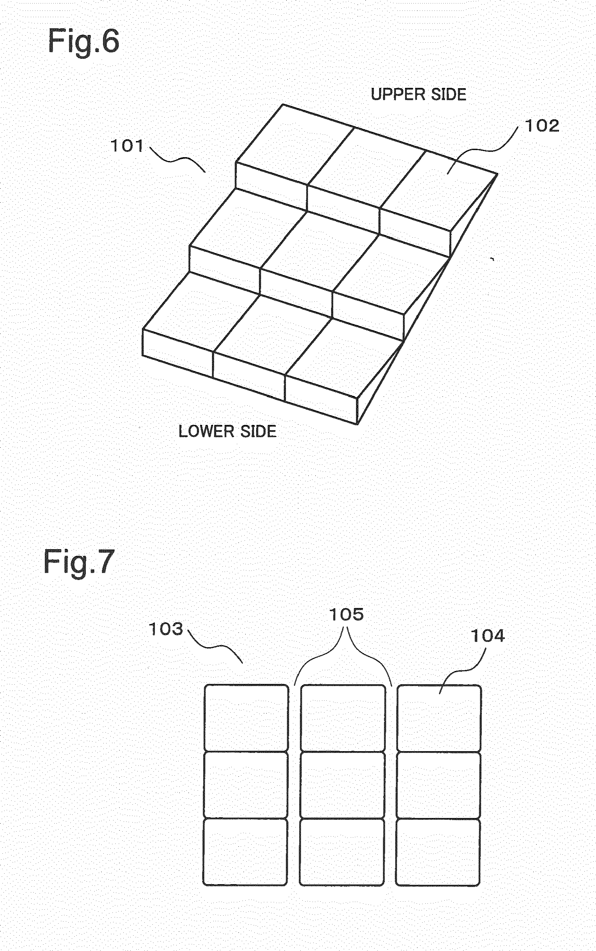

Fig. 6 is a figure which schematically indicates a part of an operation unit of the terminal device in relation to the Japanese Patent Application Laid-Open No. 2009-009195. As shown in Fug. 6, an operation unit 101 has nine operation keys 102 arranged three keys in a horizontal direction by three keys in a vertical direction. The shape of each operation key 102 is formed as big as possible so that operability and functionality will not be damaged, and the operation key 102 is arranged so that distance between each operation key 102 will become narrow in order to make an area which the operation unit 101 occupies to a small size. Each operation key 102 is shaped so that inclination gradually becomes high from an upper side to a lower side. The operation unit 101 is shaped so that it forms three steps of a stair in the vertical direction.

Thus, if each operation key 102 has the shape of inclination which gradually becomes high from the upper side to the lower side, the inclination becomes near to inclination of a finger at a user's operation. Therefore, because a contact area for the finger with the operation key 102 is enlarged, a user can have a merit of easy operation. In addition, by arranging the operation key 102 in a stair-like form, steps will be formed with the neighboring keys in the vertical direction. Therefore, it also has a merit that a user can identify a desired key to push it down among keys which are closely locating at the vertical direction with tactile sensation.

Fig. 7 is a figure which schematically indicates a part of the operation unit of the terminal device in relation to the Japanese Patent Application Laid-Open No. 2009-009195. As shown in Fig. 7, as is similar to Fag. 6, an operation unit 103 has nine operation keys 104 arranged three in the horizontal direction by three in the vertical direction. A separator 105 is installed between the operation keys 104 which are neighboring in the horizontal direction. With the separator 105, a user can identify a desired key to push it down among the keys which are closely locating in the horizontal direction with tactile sensation.

By the way, when a user operates operation keys of a mobile phone, the user often operates by using a thumb. At that time, a belly of the thumb will be a contact surface with the operation keys. The belly of thumb is bilaterally symmetric at a center line from a fingertip of the thumb to a second joint, and is similar to a plane. Accordingly, it is desirable that a shape of surface of the operation key which is touched by the thumb should be similar to a shape of contact surface of the thumb with the operation keys. Following to is kind of shape, the user can easily press the operation keys with the thumb and can add power most efficiently onto the operation keys.

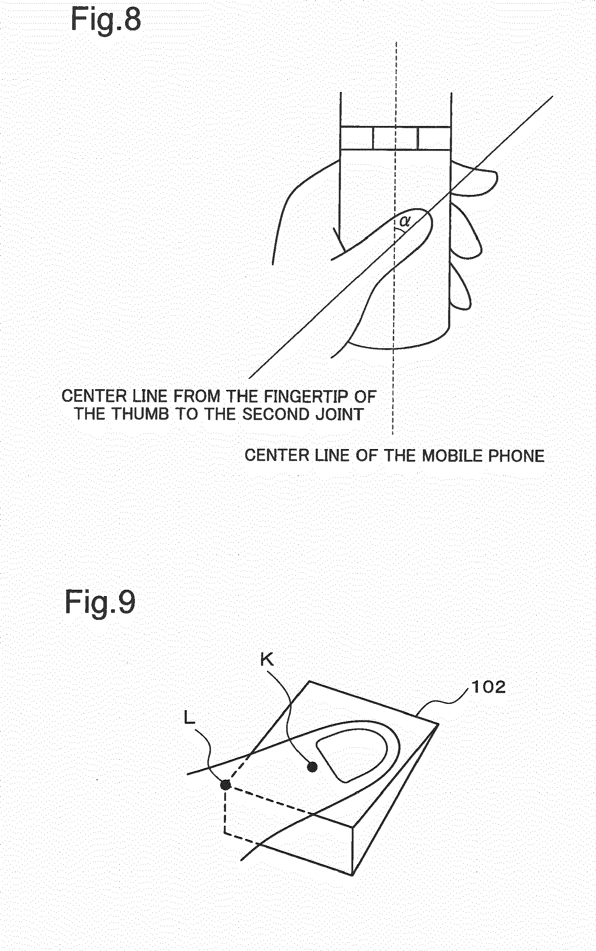

Fig. 8 is a figure showing an example of a movement of the thumb when the user operates the mobile phone. As shown in Fin. 8, it usually has a fixed angle α instead of parallel between the center line from the fingertip of the thumb to the second joint and a center line of the mobile phone. Accordingly, the thumb operates the operation key 102 from a direction having the definite angle α to the operation key 102.

Fig. 9 is a figure showing a positional relationship between the operation key 102 and the finger when operating the operation key 102, which is shown in Fig. 6, based on an operation as shown in Fig. 8. A point K indicates a point that power is exceedingly added in the case that the thumb pushes down something. The thumb pushes down the operation key 102 at a position as shown in Fig. 9.

Japanese Patent Application Laid-Open 2003-123584 also discloses a related art.

### DISCLOSURE OF THE INTENTION

### Problem to be Solved by the Invention

As described above, in the case that the shape of the surface of the operation key which the thumb contacts is similar to the shape of the contact surface of the thumb to the operation key, the power is easy transmitted from the thumb to the operation key. However, as shown in Fig. 9, in the case that the operation key 102 has a shape as shown in Fig. 6, the shape of the surface which the thumb contacts to the operation key is different from the contacted surface of the thumb with the operation key. That is, while the contact surface with the operation key 102 of the thumb is flat, the operation key 102 has an angular shape having angle L. When the thumb pushes down onto this kind of operation key 102, the position to which power of the finger is exceedingly added is a touching point having an angle L instead of at the point K. Although Fig. 9 indicates an example of operation of the operation key 102 using the thumb of a left hand, it is similar when it operates the operation key using a thumb of a right hand. Accordingly, because the power will be exceedingly added to the point which is shifted from the point K when it uses the operation key shown in Fag. 6, there is a problem that it is difficult to efficiently transmit the power from the finger to the operation key. This kind of situation influences on a user's subtle operation feeling with the operation key.

The present invention has been made in view of the above-mentioned problems. The main purpose of the present invention is to provide an operation key wherein it efficiently transmits power of a finger and the terminal device equipped with the operation key.

### Means for Solving Problem

The first operation key of the present invention includes a first surface which protrudes upwards in an entire region and has an upper side which is smoothly curved part having a maximum point between both corners, and a second surface which overlays the curved part and the opposing side of the first surface, protrudes upwards in the entire region in a direction of the opposing side, has the maximum point between the both corners, and is a curved surface which is descended in a direction crossing at right angles with the opposing side, wherein a length of a line from the maximum point of the first surface to a bottom side of the first surface perpendicularly to the bottom side along the first surface is shorter than a length of a line from the maximum point to a side which is opposing the first surface perpendicularly to the opposing side along the second surface.

A first terminal device of the present invention includes the operation key which includes a first surface which protrudes upwards in an entire region and has an upper side which is smoothly curved part having a maximum point between both corners, and a second surface which overlays the curved part and the opposing side of the first surface, protrudes upwards in the entire region in a direction of the opposing side, has the maximum point between the both corners, and is a curved surface which is descended in a direction crossing at right angles with the opposing side, wherein a length of a line from the maximum point of the first surface to a bottom side of the first surface perpendicularly to the bottom side along the first surface is shorter than a length of a line from the maximum point to a side which is opposing the first surface perpendicularly to the opposing side along the second surface.

### Effect of the Invention

According to the present invention, a user can enjoy a merit that it can efficiently transmit power from a finger to the operation key of the terminal device.

### BRIEF DESCRIPTION OF THE DRAWLING

Fig. 1 is a perspective view showing a terminal device according to a first exemplary embodiment of the present invention.
Fig. 2A is a perspective view showing a shape of an operation key which the terminal device equipped.
Fig. 2B is a cross-sectional view showing a shape of the operation key which the terminal device equipped.
Fig. 2C is a cross-sectio view showing a shape of the operation key which the terminal device equipped.
Fig. 3A is a side view illustrating a movement of a finger which operates the operation key.
Fig. 3B is a top plain view illustrating a movement of a finger which operates the operation key.
Fig. 4A and Fig. 4B are drawings showing other examples of arrangement the operation key.
Fig. 5 is a side view showing an arrangement of the operation keys in which the height of the vertex is different for each line.
Fig. 6 is a drawing which schematically indicates a part of an operation unit of the terminal device in relation to a Japanese Patent Application Laid-Open No. 2009-009195.
Fig. 7 is a drawing which schematically indicates a part of the operation unit of the terminal device in relation to the Japanese Patent Application Laid-Open No. 2009-009195.
Fig. 8 is a drawing showing an example of a movement of a thumb when a user operates a mobile phone.
Fig. 9 is a drawing showing a positional relationship between the operation key and a finger when a user operates the operation key of the mobile phone.

### BEST MODE FOR CARRYING OUT THE INVENTION

### (First exemplary embodiment)

Next, it will describe a first exemplary embodiment of the present invention in detail with reference to the drawings.

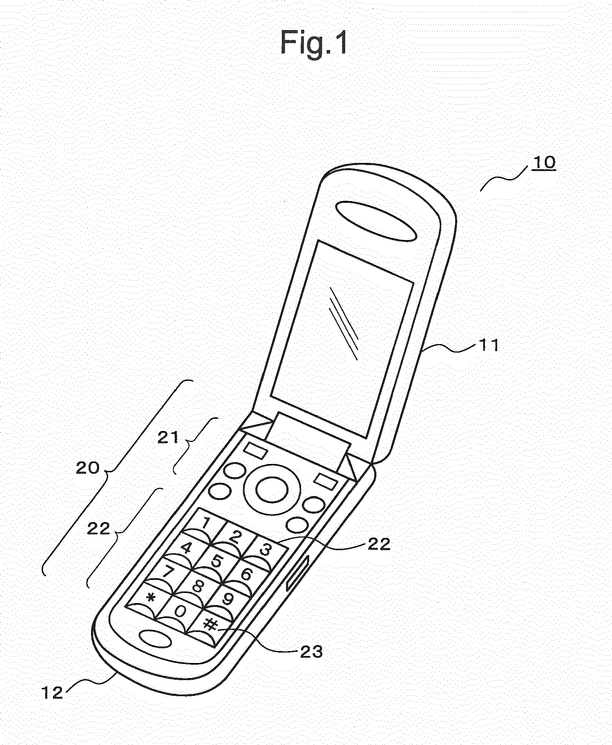

Fig. 1 is the perspective view showing a terminal device 10 according to the first exemplary embodiment. According to the embodiment, it indicates a mobile phone as an example of the terminal device 10. The terminal device 10 includes an upper housing 11 and a lower horsing 12. The lower horsing 12 has an operation unit 20. The operation unit 20 includes a first operation unit 21 and a second operation unit 22. The first operation unit 21 includes keys such as enter key, an applications activation key and a call key in order to operates functions of the terminal device 10. The second operation unit 22 includes keys for inputting numerals and characters or the like.

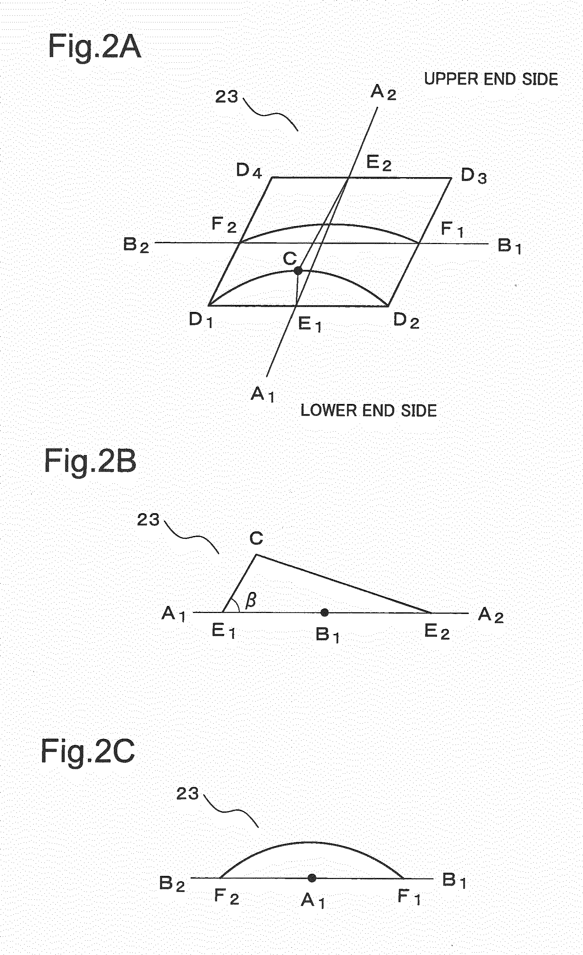

Fig. 2A is the perspective view illustrating the shape of each operation key 23 which is included in the second operation unit 22. Fig. 2B is the cross-sectional view at a section A₁-A₂ of an operation key 23 which is shown in Fig. 2A. Fig. 2C is the cross-sectional view at a section B₁-B₂ of the operation key 23 which is shown in Fig. 2A. Each square of the operation key 23 is denoted as D₁, D₂, D₃ and D₄ respectively. The section A₁-A₂ is a section which passes through a line connecting a midpoint of a line segment D₁-D₂ and a midpoint of a line segment D₃-D₄. The section B₁-B₂ is a section which passes through a line connecting a midpoint of a line segment D₁-D₄ and a midpoint of a line segment D₂-D₃. It supposes a point of intersection of the section A₁-A₂ and the line segment D₁-D₂ as E₁. In addition, it supposes that a point of intersection of the section A₁-A₂ and the line segment D₃-D₄ as E₂. Further, it supposes that a point of intersection of the section B₁-B₂ and the line segment D₂-D₃ as F1, and the point of intersection of the sections B₁-B₂ and the line segment D₁-D₄ as F₂.

As shown in Fig. 2A, a curve D₁-C-D₂ forms an arch shape with C as a vertex. A surface which overlays the curve D₁-C-D₂ and the line segment D₁-D₂ of the operation key 23 is denoted as a front surface D₁-C-D₂. A surface which overlays the curve D₁-C-D₂ and the opposing line segment D₃-D₄ is a top surface D₁-C-D₂-D₃-D₄ of the operation key 23. A surface which overlays the corner D₁, the corner D₂, the corner D₃ and the corner D₄ is a bottom surface of the operation key 23. A vertex C has a fixed height from the bottom surface D₁-D₂-D₃-D₄. The top surface D₁-C-D₂-D₃-D₄ has an inclination descended in a straight line from the vertex C to the line segment D₃-D₄.

Here, the front surface D₁-C-D₂ is also denoted as a first surface. The top surface D₁-C-D₂-D₃-D₄ is also denoted as a second surface. The vertex C is also denoted as a maximum point. The first surface which is the front surface D₁-C-D₂ has the upper side D₁-C-D₂ which protrudes upwards in an entire region and has a smooth curved part with the vertex C between the corner D₁ and the corner D₂. The second surface which is the top surface D₁-C-D₂-D₃-D₄ overlays the above-mentioned curved part D₁-C-D₂ and the side D₃-D₄ which is opposing to above-mentioned first surface, protrudes upwards in the entire region to the direction of opposing side D₃-D₄, has a maximum point at a surface overlays between the side D₁-D₄ and the side D₂-D₃, and is a descended curved surface to the direction crossing at right angles with above-mentioned opposing side D₃-D₄.

As shown in Fig. 2B, the section at the section A₁-A₂ of the operation key 23 forms a triangle E₁-C-E₂ with the vertex C. An angle β, which is formed by a line segment C-E₁ and a line segment E₁-E₂, can be anyone among acute-angled, 90 degrees or obtuse angle. However, in order to prevent a catch when a finger moves from the lower end part to the upper end part on the operation key 23, it is desirable that angle β should be acute angle.

A length of a line from the vertex C of the front surface D₁-C-D₂ to the bottom side D₁-D₂ of the front surface D₁-C-D₂ perpendicularly to the bottom side D₁-D₂ along the front surface D₁-C-D₂ is shorter than a length of a line from the vertex C to the side D₃-D₄, which is the opposing to side D₁-D₂, perpendicularly to the opposing side D₃-D₄ along the top surface D₁-C-D₂-D₃-D₄. With reference to Fig. 2B, a distance C-E₁ which is descending from the vertex C to the E₁ is shorter than a distance C-E₂ which is descending from the vertex C to the E2.

In addition, as shown in Fig. 2C, the upper side of the section at the section B₁-B₂ of the operation key 23 is shaped in arched form. By forming the shape, because a valley is formed between the neighboring operation keys 23 in a horizontal direction, even if it does not install a separator between the operation key and the neighboring operation keys 23 in the horizontal direction, a user can identify the neighboring operation keys 23 with tactile sensation.

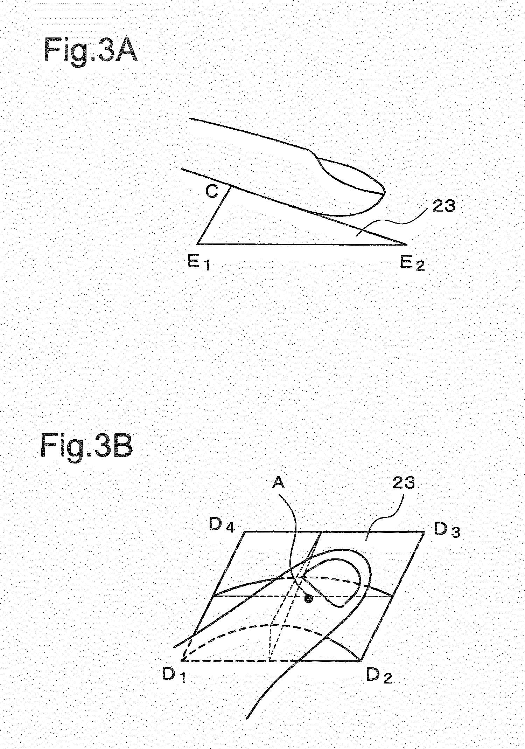

Fig. 3A is the side view illustrating a movement of a finger which operates the operation key 23 which is shown in Fig. 2A. Fig. 3B is the top plain view illustrating a movement of a finger which operates the operation key 23 which is shown in Fig. 2A. A point A indicates a point that the finger can exceedingly add power. As shown in Fig. 3A, the operation key 23 has an inclination which gradually becomes high to low from an upper end side to a lower end side. Following to the shape, because the finger fits the operation key 23, a user can easily push down the operation key 23. In addition, as shown in Fig. 3B, because the top surface D₁-C-D₂-D₃-D₄ of the operation key 23 has a curved surface with near to a plane shape and has no angular parts, the shape of the contact surface of the operation key 23 may fit with a thumb. Accordingly, because it does not cause any angular feeling to the finger when a user pushes down the operation key 23, it can exceedingly add power onto the point A with no physical disorder feeling. Therefore, a user can efficiently transmit power with the finger onto the operation key 23.

As stated above, according to the first exemplary embodiment, the operation key 23 includes the front surface which overlays the curve D₁-C-D₂ which is forming the arch With C as the vertex and the line segment D₁-D₂, and the top surface which overlays the curve D₁-C-D₂ and the line segment D₃-D₄ which is opposing against the curve D₁-C-D₂. With the configuration, a user can push down the operation key 23 at the point A where the finger can exceedingly add power when pushing down the operation key 23. Therefore, it can get an effect that the power can be transmitted efficiently from the finger to the operation key 23. It has described the embodiment in the case of operating by the thumb of a user's left hand. However, the shape does not limited to the stated case, and an operation using a thumb of a user's right hand is almost similar to the above descriptions. Accordingly, following to the shape of the key according to the embodiment, a user can enjoy a merit that it can efficiently transmit power from the finger to the operation key 23 in the case that it pushes down the operation key 23 by the either thumb.

In addition, because the upper side of the section in the horizontal direction of the operation key 23 forms the arch shape, even if the separator is not installed between the operation key and neighboring operation key 23 which is locating in the horizontal direction, a user can have a merit of identifying the neighbored operation key 23 with tactile sensation.

Further, the curve D₁-C-D₂ does not limit to an arch shape having C as the vertex, and it should be a smooth curve with a convexity to upward and has a maximum point on the line segment D₁-D₂. A maximum point is a point that the distance from the bottom surface D₁-D₂-D₃-D₄ to the point is the largest along the curve D₁-C-D₂. In addition, the smooth curve means a differentiable curve. Moreover, as shown in Fig. 2B, the line segment C-E₁, which is the line looking from the direction crossing at right angles to the line segment D₃-D₄ of the top surface D₁-C-D₂-D₃-D₄, is not limited to descend in a straight line. For example, the line segment C-E₁ may be convexity to upward, or be convexity to downward. Similarly, the line segment C-E₂, which is a line looking from the direction crossing at right angles to the line segment D₃-D₄ of the front surface D₁-C-D₂, is not limited to descend in a straight line. For example, the line segment C-E₂ may be convexity to upward, or be convexity to downward.

### (Second Exemplary embodiment)

The second exemplary embodiment will describe arrangements of the operation key 23 which is described in the first exemplary embodiment.

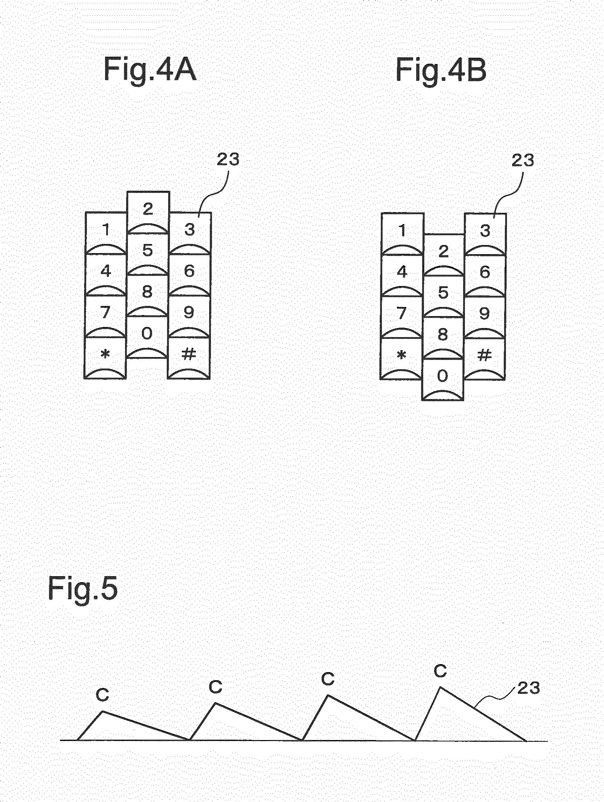

Fig. 4A and Fig. 4B are the figures showing other examples of the arrangement of the operation key 23 of the second operation unit 22 which is indicated in the first exemplary embodiment. According to the first exemplary embodiment, it has described that each operation key 23 is arranged in order. However, the arrangement of the key is not limited to the embodiment, and it may be arranged so that the operation key 23 arranged in the central line will be arranged over the top of the operation key 23 which is arranged in other lines as shown in Fig. 4A. Alternatively, as shown in Fig. 4B, the operation key 23 arranged in the central line may be arranged so that it will be lower than the operation key 23 which is arranged in other lines. Herewith, a user can easily identify the line of the operation key 23 with tactile sensation by arranging the operation key 23, which is neighboring in a horizontal direction of the terminal device 10, in the position of shifting each other in the horizontal direction.

In addition, in order to easily identify those operation keys with tactile sensation, a surface of the operation keys 23 of each line may have different feeling. For example, the operation key 23 of the central line has a surface of rough feeling, and the operation key 23 of other lines may have a surface of smooth feeling.

In addition, the operation key 23 may have a different height of the vertex C for each line. Fig. 5 is the side view showing an arrangement of the operation key 23 in which height of the vertex C is different for each line. As shown in Fig. 5, the operation key 23 in the highest side has a highest vertex C, and the operation keys 23 in the lower sides gradually may have lower vertexes C. Alternatively, the operation key 23 in the highest side has a lowest vertex C, and the operation keys 23 in the lower sides gradually may have higher vertexes C.

As described above, according to the second exemplary embodiment, because the operation key 23 is arranged so that each line is shifting, a user can identify the line of the operation key 23 with tactile sensation. In addition, according to the second exemplary embodiment, because a user can have different feeling for each line of the operation key 23, the user can enjoy a merit of easily identify the line of the operation key 23 with tactile sensation.

In addition, because the operation key 23 on each line has a different height of the vertex C, a user can enjoy a merit of easily identify the line of the operation key 23 with tactile sensation.

According to the above-mentioned embodiment, although it showed that it forms only the operation key 23 of the second operation unit 22 with the shape shown in Fig. 2, it may form entire keys of the operation unit 20 with the shape shown in Fig. 2.

While having described an invention of the present application referring to the embodiments, the invention of the present application is not limited to the above mentioned embodiments. It is to be understood that to the configurations and details of the invention of the present application, various changes can be made within the scope of the invention of the present application by those skilled in the arts.

This application claims priority from Japanese Patent Application 2009-164059, filed on July 10, 2009, the contents of which are incorporation herein by the reference in their entirety.

### Industrial Applicability

According to the above-mentioned embodiments of the present invention, it has described a mobile phone as one of a typical terminal device. However, the present invention is not limited to these exemplary embodiments. For example, it can also apply the present invention to a portable personal computer, a PHS (Personal Handy-phone System), a game machine and a remote controller or the like.

### DESCRIPTION OF THE CODE

- 10: terminal device
- 11: upper housing
- 12: lower housing
- 20, 101, and 103: operation unit
- 21: first operation unit
- 22: second operation unit
- 23: operation key
- 102 and 104: operation key
- 105: separator

## Claims

1. An operation key, **characterized by** comprising:
a first surface which protrudes upwards in an entire region and has an upper side which is smoothly curved part having a maximum point between both corners; and
a second surface which overlays the curved and the opposing side of the first surface, protrudes upwards in the entire region in a direction of the opposing side, has the maximum point between the corners, and is a curved surface which is descended in a direction crossing at right angles the opposing side, wherein
a le of a line from the maximum point of the first surface to a bottom side of the first surface to the bottom side along the first surface is shorter than a length of a line from the maximum point to a side which is opposing the first surface to the opposing side along the second surface.

2. The operation key according to claim 1, **characterized in that**
the second surface descends in a straight line in a direction of crossing at right angles with an opposing side of the first surface.

3. The operation key according to claims 1, **characterized in that**
the second surface descends in a convexity to upward in a direction of crossing at right angles with the opposing side of the first surface.

4. The operation key according to claim 1, **characterized in that**
the second surface in a convexity to downward in a direction of crossing at right angles with the opposing side of the first surface.

5. The operation key according to any one of claims 1 to 4, **characterized by** further comprising:
a bottom surface which is crossing with the first surface and the second surface respectively; wherein
an acute is the first surface and the surface.

6. The operation key according to any one claims 1 tao 5, **characterized in that**
an upper side of the first surface is bilaterally symmetric with a center of the maximum point.

7. A terminal device, **characterized by** comprising:
the operation keys according to any one of claims 1 to 6.

8. The terminal device according to 7, **characterized in that**
a height of a maximum point of the operation key from the bottom surface is differently arranged for each line of the operation key.

9. The terminal device according to claim 8, **characterized in that**
a height of the maximum point of the operation key from the bottom surface gradually becomes low from the operation key arranged in a line of a highest side to the operation key arranged in a line of a lowest side of the terminal device.

10. The terminal device according to claim 8, **characterized in that**
a of the point of the operation key from the surface gradually becomes high the operation key arranged in the line of a highest side to the operation key arranged in the of a lowest side of the terminal device.

11. The terminal device according to any one of claims 7 to 10, **characterized in that**
the operation key which is locating at neighbor in horizontal direction in the own device is arranged in a position of shirting each other in the direction.
